# EUROPEAN PATENT APPLICATION

(11) **EP 3 009 413 A1**
(43) Date of publication of application: **20.04.2016**
(21) Application number: 15198051.3
(22) Date of filing: 24.08.2010
(51) Int. Cl.: C03C 27/12, B32B 27/18, C08K 3/22, C08K 5/3467, C08L 101/00, C09J 11/04, C09J 11/06, C09J 201/00

(54) **INTERMEDIATE FILM FOR LAMINATED GLASS AND LAMINATED GLASS**

(30) Priority: 24.08.2009 JP 2009193721
(62) Divisional of application: 10811838.1
(71) Applicant: SEKISUI CHEMICAL CO., LTD., Osaka-shi, Osaka 530 (JP)
(72) Inventor: KITANO, Hirofumi, Kouka-shi, Shiga 528-8585 (JP); FUKATANI, Juichi, Kouka-shi, Shiga 528-8585 (JP); II, Daizou, Mishima-gun, Osaka 618-8589 (JP); OKABAYASHI, Takazumi, Mishima-gun, Osaka 618-8589 (JP); TSUNODA, Ryuta, Kouka-shi, Shiga 528-8585 (JP)
(74) Representative: Merkle, Gebhard

(57) **Abstract**

Provided is an interlayer film for a laminated glass which can give excellent heat shielding properties to a laminated glass and maintain the excellent heat shielding properties of the laminated glass for a long period of time. Also provided is a laminated glass including the interlayer film for a laminated glass.

An interlayer film 1 for a laminated glass according to the present invention includes a heat shielding layer 2, and an ultraviolet shielding layer 3. The heat shielding layer 2 includes a thermoplastic resin, heat shielding particles and at least one component selected from a phthalocyanine compound, a naphthalocyanine compound, and an anthracyanine compound. The ultraviolet shielding layer 3 includes a thermoplastic resin and an ultraviolet shielding agent. The laminated glass according to the present invention includes: a first laminated glass component and a second laminated glass component; and an interlayer film sandwiched between the first and second laminated glass components. The interlayer film is the interlayer film 1 for a laminated glass according to the present invention.

## Description

### TECHNICAL FIELD

The present invention relates to an interlayer film for a laminated glass which is used for a laminated glass of vehicles, buildings, or the like. More specifically, the present invention relates to an interlayer film for a laminated glass which enables to increase the heat shielding properties of the laminated glass, and a laminated glass including the interlayer film for a laminated glass.

### BACKGROUND ART

A laminated glass is a safety glass which, even when broken by impact from the outside, shatters into few flying glass fragments. For this reason, a laminated glass is widely used for cars, rail cars, aircrafts, boats and ships, buildings, and the like. The laminated glass is produced by sandwiching an interlayer film for a laminated glass between a pair of glass plates. Such a laminated glass used for opening portions of vehicles and buildings is desired to have high heat shielding properties.

Infrared rays, having a wavelength of not less than 780 nm which is longer than that of visible light, have a small amount of energy compared with ultraviolet rays. The infrared rays, however, have a large thermal effect, and are emitted as heat when absorbed by a substance. For this reason, the infrared rays are commonly referred to as heat rays. The laminated glass is therefore required to be sufficiently shielded from the infrared rays so as to have high heat shielding properties.

Patent Document 1 teaches, as a way of effectively blocking the infrared rays (heat rays), an interlayer film for a laminated glass which contains heat shielding particles such as tin-doped indium oxide particles (ITO particles) and antimony-doped tin oxide particles (ATO particles).

Patent Document 2 teaches a heat shielding component including not less than two layers each containing at least one selected from phthalocyanine infrared absorbents and ultraviolet absorbents. The heat shielding component is placed in such a manner that layers containing an ultraviolet absorbent or the like are closer to the heat-ray incident side than the other layers.
Patent Document 1: WO 01/25162 A1
Patent Document 2: JP 10-77360 A

### SUMMARY OF THE INVENTION

### PROBLEMS TO BE SOLVED BY THE INVENTION

In recent years, the conventional interlayer films containing ITO particles or ATO particles are required to have even higher heat shielding properties. The ITO particles and ATO particles, however, do not absorb near infrared rays sufficiently. Therefore, just adding the ITO particles or ATO particles to the interlayer film as in Patent Document 1 does not easily enable to greatly increase the heat shielding properties of the laminated glass.

For example, in the U.S., the California Air Resources Board (CARB) proposed reduction of carbon oxide discharged from cars so that greenhouse gas was reduced. The CARB considered regulating the heat energy passing through the laminated glass and flowing into the car such that the fuel consumed by the air conditioner was reduced and thereby the fuel economy of the car was increased. Specifically, the CARB was planning to introduce the Cool Cars Standards.

The Cool Cars Standards were to be enforced in 2012 to require the total solar transmittance (Tts) of the laminated glasses used for cars to be not more than 50%. The Cool Cars Standards were also to regulate the Tts of the laminated glasses to be not more than 40% in 2016. The Tts is an index of the heat shielding properties.

Heat reflecting laminated glass having a metal thin film deposited thereon or heat reflecting laminated glass containing heat reflecting PET (such glass is typically referred to as heat-reflecting glass) reflects not only infrared rays but also communication waves in the communication wavelength range. In the case of using heat reflecting laminated glass for the windshield, the heat reflecting portion needs to be cut out to allow many sensors to work. As a result, the average Tts of the entire surface of the windshield including the heat reflecting laminated glass having a Tts of 50% is about 53%. Therefore, a laminated glass transmitting communication waves therethrough and absorbing infrared rays was to be allowed to have a Tts of up to 53%.

As of August, 2010, there is still a tendency that a laminated glass having a low Tts is desired even though the Cool Car Standards were not introduced.

Further, a laminated glass is required to have a high visible transmittance as well as high heat shielding properties. For example, the visible transmittance is desired to be not less than 70%. That is, increasing the heat shielding properties while maintaining a high visible transmittance is required.

In the case of employing an interlayer film for a laminated glass which contains the heat shielding particles described in Patent Document 1, it is very difficult to produce a laminated glass that has both high heat shielding properties and a high visible transmittance. For example, it is very difficult to produce a laminated glass having both a Tts of not more than 53% and a visible transmittance of not less than 70%.

Also in the case of using at least one selected from phthalocyanine infrared absorbents and ultraviolet absorbents as in Patent Document 2, it is difficult to produce a laminated glass having both high heat shielding properties and a high visible transmittance.

The present invention aims to provide an interlayer film for a laminated glass which can give excellent heat shielding properties to a laminated glass and maintain the excellent heat shielding properties of the laminated glass; and a laminated glass including the interlayer film for a laminated glass.

### MEANS FOR SOLVING THE PROBLEMS

A broad aspect of the present invention is an interlayer film for a laminated glass, comprising: a heat shielding layer; and a first ultraviolet shielding layer, wherein the heat shielding layer comprises a thermoplastic resin, heat shielding particles and at least one component selected from a phthalocyanine compound, a naphthalocyanine compound, and an anthracyanine compound, and the first ultraviolet shielding layer comprises a thermoplastic resin and an ultraviolet shielding agent.

In a specific aspect of the interlayer film for a laminated glass according to the present invention, the first ultraviolet shielding layer is laminated on one surface of the heat shielding layer.

In another specific aspect of the interlayer film for a laminated glass comprises to the present invention, the interlayer film further comprises a second ultraviolet shielding layer, wherein the first ultraviolet shielding layer is placed on one surface side of the heat shielding layer, the second ultraviolet shielding layer is placed on the other surface side of the heat shielding layer, and the second ultraviolet shielding layer comprises a thermoplastic resin and an ultraviolet shielding agent.

In yet another specific aspect of the interlayer film for a laminated glass according to the present invention, the first ultraviolet shielding layer is laminated on one surface of the heat shielding layer, and the second ultraviolet shielding layer is laminated on the other surface of the heat shielding layer.

In yet another specific aspect of the interlayer film for a laminated glass according to the present invention, an ultraviolet transmittance of the ultraviolet shielding layer is not more than 0.5% at a wavelength of 360 to 390 nm, or the ultraviolet transmittance of the ultraviolet shielding layer is not more than 0.8% at a wavelength of 380 to 390 nm.

In yet another specific aspect of the interlayer film for a laminated glass according to the present invention, the component is at least one selected from the group consisting of phthalocyanine, a phthalocyanine derivative, naphthalocyanine, and a naphthalocyanine derivative.

In yet another specific aspect of the interlayer film for a laminated glass according to the present invention, the heat shielding particles are metal oxide particles.

In yet another specific aspect of the interlayer film for a laminated glass according to the present invention, the heat shielding particles are tin-doped indium oxide particles.

In yet another specific aspect of the interlayer film for a laminated glass according to the present invention, the thermoplastic resin is a polyvinyl acetal resin.

In yet another specific aspect of the interlayer film for a laminated glass according to the present invention, each of the heat shielding layer and the ultraviolet shielding layer further comprises a plasticizer.

In yet another specific aspect of the interlayer film for a laminated glass according to the present invention, an amount of the ultraviolet shielding agent is 0.2 to 1.0 wt% based on 100 wt% of the ultraviolet shielding layer.

The laminated glass according to the present invention includes: a first laminated glass component and a second laminated glass component; and an interlayer film sandwiched between the first and second laminated glass components, wherein the interlayer film is an interlayer film for a laminated glass according to the present invention.

### EFFECT OF THE INVENTION

The interlayer film for a laminated glass according to the present invention can give excellent heat shielding properties to a laminated glass because the interlayer film has the above heat shielding layer having a specific composition and the above first ultraviolet shielding layer having a specific composition. The interlayer film can also maintain the excellent heat shielding properties of the produced laminated glass for a long period of time.

### BRIEF DESCRIPTION OF DRAWINGS

Fig. 1 is a partially-cutout cross-sectional view schematically illustrating an example of the interlayer film for a laminated glass according to one embodiment of the present invention.
Fig. 2 is a partially-cutout cross-sectional view illustrating an example of the laminated glass including the interlayer film for a laminated glass illustrated in Fig. 1.

### MODES FOR CARRYING OUT THE INVENTION

Hereinafter, the present invention is described in detail.

### (Interlayer film for laminated glass)

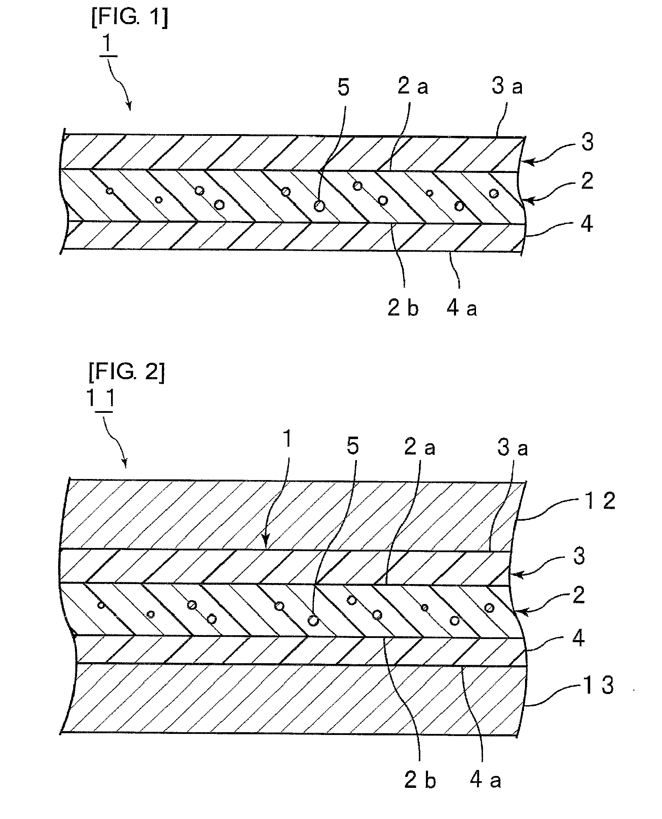

One example of the interlayer film for a laminated glass according to one embodiment of the present invention is illustrated in Fig. 1 as a partially-cutout cross-sectional view.

The interlayer film 1 illustrated in Fig. 1 includes a heat shielding layer 2, a first ultraviolet shielding layer 3 placed on the side of one surface 2a (first surface) of the heat shielding layer 2, and a second ultraviolet shielding layer 4 placed on the other surface 2b (second surface) of the heat shielding layer 2. The first ultraviolet shielding layer 3 is laminated on the one surface 2a of the heat shielding layer 2. The second ultraviolet shielding layer 4 is laminated on the other surface 2b of the heat shielding layer 2. The interlayer film 1 is used for producing a laminated glass. The interlayer film 1 is an interlayer film for a laminated glass.

Each of the first ultraviolet shielding layer 3 and the second ultraviolet shielding layer 4 includes a thermoplastic resin and an ultraviolet shielding agent. Since each of the first and second ultraviolet shielding layers 3 and 4 includes an ultraviolet shielding agent, they function as layers effectively preventing transmission of the ultraviolet rays.

The first ultraviolet shielding layer 3 preferably has an ultraviolet transmittance of not more than 4% at a wavelength of 360 to 400 nm, or is preferably a layer for giving an ultraviolet transmittance of not more than 0.5% to the interlayer film 1 at a wavelength of 360 to 400 nm. Since the second ultraviolet shielding layer 4 includes an ultraviolet shielding agent, the second ultraviolet shielding layer 4 preferably has an ultraviolet transmittance of not more than 4% at a wavelength of 360 to 400 nm, or is preferably a layer for giving an ultraviolet transmittance of not more than 0.5% to the interlayer film 1 at a wavelength of 360 to 400 nm. The interlayer film 1 preferably has an ultraviolet transmittance of not more than 0.5% at a wavelength of 360 to 400 nm. In the case that the interlayer film 1 has such an ultraviolet transmittance, the excellent heat shielding properties of the laminated glass can be maintained for a longer period of time. The ultraviolet shielding layer more preferably has an ultraviolet transmittance of not more than 3.6%, still more preferably not more than 3%, and particularly preferably not more than 2.5% at a wavelength of 360 to 400 nm. The interlayer film more preferably has an ultraviolet transmittance of not more than 0.45%, still more preferably not more than 0.4%, and particularly preferably not more than 0.35% at a wavelength of 360 to 400 nm. The term "ultraviolet transmittance at a wavelength of 360 to 400 nm" means the average value of the light transmittances of the laminated glass at 360 nm, 365 nm, 370 nm, 375 nm, 380 nm, 385 nm, 390 nm, 395 nm, and 400 nm.

The first ultraviolet shielding layer 3 may have an ultraviolet transmittance of not more than 0.5% at a wavelength of 360 to 390 nm, or may be a layer for giving an ultraviolet transmittance of not more than 0.05% to the interlayer film 1 at a wavelength of 360 to 390 nm. The second ultraviolet shielding layer 4 may have an ultraviolet transmittance of not more than 0.5% at a wavelength of 360 to 390 nm, or may be a layer for giving an ultraviolet transmittance of not more than 0.05% to the interlayer film 1 at a wavelength of 360 to 390 nm. The interlayer film 1 preferably has an ultraviolet transmittance of not more than 0.05% at a wavelength of 360 to 390 nm. In the case that such an ultraviolet transmittance is achieved, the excellent heat shielding properties of the laminated glass can be maintained for a longer period of time. The ultraviolet shielding layer more preferably has an ultraviolet transmittance of not more than 0.3%, still more preferably not more than 0.2%, and particularly preferably not more than 0.1% at a wavelength of 360 to 390 nm. The interlayer film more preferably has an ultraviolet transmittance of not more than 0.04%, still more preferably not more than 0.02%, and particularly preferably not more than 0.015% at a wavelength of 360 to 390 nm. The term "ultraviolet transmittance at a wavelength of 360 to 390 nm" means the average value of the light transmittances of the laminated glass at 360 nm, 365 nm, 370 nm, 375 nm, 380 nm, 385 nm, and 390 nm.

The first ultraviolet shielding layer 3 may have an ultraviolet transmittance of not more than 0.8% at a wavelength of 380 to 390 nm, or may be a layer for giving an ultraviolet transmittance of not more than 0.1% to the interlayer film 1 at a wavelength of 380 to 390 nm. The second ultraviolet shielding layer 4 may have an ultraviolet transmittance of not more than 0.8% at a wavelength of 380 to 390 nm, or may be a layer for giving an ultraviolet transmittance of not more than 0.1% to the interlayer film 1 at a wavelength of 380 to 390 nm. The interlayer film 1 preferably has an ultraviolet transmittance of not more than 0.1% at a wavelength of 380 to 390 nm. In the case that such an ultraviolet transmittance is achieved, the excellent heat shielding properties of the laminated glass can be maintained for a long period of time. The ultraviolet shielding layer more preferably has an ultraviolet transmittance of not more than 0.7%, still more preferably not more than 0.66%, and particularly preferably not more than 0.2% at a wavelength of 380 to 390 nm. The interlayer film more preferably has an ultraviolet transmittance of not more than 0.04%, still more preferably not more than 0.03%, and particularly preferably not more than 0.02% at a wavelength of 380 to 390 nm. The term "ultraviolet transmittance at a wavelength of 380 to 390 nm" means the average value of the light transmittances of the laminated glass at 380 nm, 385 nm, and 390 nm.

The "ultraviolet transmittance at a wavelength of 360 to 400 nm", "ultraviolet transmittance at a wavelength of 360 to 390 nm" and "ultraviolet transmittance at a wavelength of 380 to 390 nm" can be measured using a laminated glass obtained by sandwiching an ultraviolet shielding layer or an interlayer film between two 2-mm-thick float glass plates in accordance with JIS R 3202.

The heat shielding layer 2 includes a thermoplastic resin, heat shielding particles 5, and at least one selected from a phthalocyanine compound, a naphthalocyanine compound, and an anthracyanine compound. Hereinafter, the at least one selected from a phthalocyanine compound, a naphthalocyanine compound, and an anthracyanine compound may be referred to as a "component X".

In the case of using an interlayer film for a laminated glass which contains heat shielding particles such as ITO particles, there has been a problem that the heat shielding properties of the laminated glass are sometimes low, making it difficult to produce a laminated glass having both a lower solar transmittance and a higher visible transmittance. The solar transmittance is an index of the heat shielding properties. Also, in the case of using an interlayer film for a laminated glass which contains heat shielding particles such as ITO particles, it has been very difficult to obtain a laminated glass that has both a total solar transmittance (Tts) of not more than 53% and a visible transmittance of not less than 70%, and it has been more difficult to set the Tts to be not more than 50%.

One of the main features of the present invention is that the heat shielding layer includes heat shielding particles and the above specific component X. The present inventors have found that the use of a heat shielding layer including both the heat shielding particles and the specific component X results in an increase in both the heat shielding properties and visible transmittance of the laminated glass.

As a result of the studies made by the present inventors, the inventors have found that simply using an interlayer film including heat shielding particles and the specific component X to produce a laminated glass eventually leads to a decrease in the heat shielding properties if the laminated glass is used for a long period of time. The present inventors have therefore made further studies, and then have found the structure of the interlayer film for a laminated glass which enables to maintain high heat shielding properties for a long period of time.

Another main feature of the present invention is the structure in which the interlayer film for a laminated glass includes multiple layers (not less than two layers) including a heat shielding layer and an ultraviolet shielding layer. This structure effectively shields the interlayer film particularly from ultraviolet rays among the light rays that enter the interlayer film from the ultraviolet shielding layer side. Particularly, ultraviolet rays having a wavelength of about 360 to 400 nm are effectively blocked. Hence, the amount of the ultraviolet rays reaching the heat shielding layer, particularly the amount of ultraviolet rays having a wavelength of 360 to 400 nm, a wavelength of 360 to 390 nm, or a wavelength of 380 to 390 nm and reaching the heat shielding layer can be reduced. Therefore, a chemical change of the component X contained in the heat shielding layer and deterioration of the resin which can be caused by the chemical change of the component X can be prevented. For this reason, the excellent heat shielding properties can be maintained for a long period of time.

Therefore, the use of an ultraviolet shielding layer together with the heat shielding layer including the component X and the heat shielding particles can sufficiently increase the heat shielding properties of the interlayer film and the laminated glass, and enables to produce a laminated glass having a low solar transmittance, which is an index of the heat shielding properties, and a high visible transmittance. Further, a laminated glass having a sufficiently low Tts and a sufficiently high visible transmittance can be produced.

For example, the solar transmittance (Ts2500) of the laminated glass can be made not more than 65% at a wavelength of 300 to 2500 nm, and the visible transmittance of the laminated glass can be made not less than 65%. Further, the solar transmittance (Ts2500) can be made not more than 60%, and the visible transmittance can be made not less than 70%. The Tts of the laminated glass can be made not more than 53%, and the visible transmittance of the laminated glass can be made not less than 70%. The Tts can also be made not more than 50%. Therefore, for example, a laminated glass can be produced which is usable under the Cool Cars Standards that the California Air Resources Board (CARB) was planning to introduce in the United States.

The properties Tts and visible transmittance herein refer to the properties required by the Cool Cars Standards. The Tts is measured, for example, by the measuring method specified by the Cool Cars Standards that were to be introduced. The visible transmittance can be measured in accordance with JIS R 3211 (1998), for example.

The interlayer film for a laminated glass according to the present invention can not only achieve both high heat shielding properties and visible transmittance, but also maintain the high heat shielding properties for a long period of time. In order to maintain the excellent heat shielding properties for a long period of time, the ultraviolet transmittance of the first ultraviolet shielding layer 3 or the interlayer film 1 at a wavelength of 360 to 400 nm, at a wavelength of 360 to 390 nm, or at a wavelength of 380 to 390 nm is preferably adjusted to be not more than a certain value.

Also, the present invention enables to increase the transparency; for example, the haze value can be made not more than 1%, and can also be made not more than 0.5%.

The interlayer film 1 has a three-layer structure in which the first ultraviolet shielding layer 3, the heat shielding layer 2, and the second ultraviolet shielding layer 4 are laminated in this order. In this way, the heat shielding layer is preferably placed between the first and second ultraviolet shielding layers, and is more preferably sandwiched between the first and second ultraviolet shielding layers. In this case, the ultraviolet rays entering the interlayer can be effectively blocked on both sides of the interlayer film by the first and second ultraviolet shielding layers.

Here, the second ultraviolet shielding layer 4 may not necessarily be used. That is, only the first ultraviolet shielding layer 3 may be laminated on the one surface 2a of the heat shielding layer 2. In this case, the first ultraviolet shielding layer of the interlayer film 1 may be placed on the light ray incident side. For example, in the case of using the laminated glass including the interlayer film for a car, the laminated glass is placed in such a manner that the first ultraviolet shielding layer is on the outer side of the car and the heat shielding layer is on the inner side of the car. The interlayer film may have a laminated structure of not less than four layers. Each of the first and second ultraviolet shielding layers 3 and 4 may contain the heat shielding particles and the specific component X.

The interlayer film for a laminated glass according to the present invention may further include another layer different from the heat shielding layer and the ultraviolet shielding layer. Further, the other layer different from the heat shielding layer and the ultraviolet shielding layer may be sandwiched between the heat shielding layer and the ultraviolet shielding layer.

The thickness of the interlayer film is not particularly limited. The thickness of the interlayer film indicates the total thickness of the respective layers constituting the interlayer film. Therefore, in the case of the interlayer film 1, the thickness of the interlayer film 1 indicates the total thickness of the heat shielding layer 2 and the first and second ultraviolet shielding layers 3 and 4. In terms of the practicality and a sufficient increase in the heat shielding properties, the lower limit of the thickness of the interlayer film is preferably 0.1 mm, and more preferably 0.25 mm, while the upper limit thereof is preferably 3 mm, and more preferably 1.5 mm. If the thickness of the interlayer film is too small, the penetration resistance of the laminated glass tends to decrease.

In terms of the practicality and sufficient long-term maintenance of the heat shielding properties, the lower limit of the thickness of each of the first and second ultraviolet shielding layers 3 and 4 is preferably 0.001 mm, and more preferably 0.2 mm, while the upper limit thereof is preferably 0.8 mm, and more preferably 0.6 mm.

In terms of the practicality and a sufficient increase in the heat shielding properties, the lower limit of the thickness of the heat shielding layer 1 is preferably 0.001 mm, and a more preferably 0.05 mm, while the upper limit thereof is preferably 0.8 mm, and more preferably 0.6 mm.

The details of the materials constituting the heat shielding layer 2 and the first and second ultraviolet shielding layers 3 and 4 are given below.

### (Thermoplastic resin)

Each of the heat shielding layer 2 and the first and second ultraviolet shielding layers 3 and 4 contains a thermoplastic resin. The thermoplastic resin may be a conventionally known thermoplastic resin. One thermoplastic resin may be used or two or more thermoplastic resins may be used in combination.

Examples of the thermoplastic resin include polyvinyl acetal resin, ethylene-vinyl acetate copolymer resin, ethylene-acrylic copolymer resin, polyurethane resin, and polyvinyl alcohol resin. Thermoplastic resins other than these may also be used.

The thermoplastic resin contained in each of the heat shielding layer 2 and the first and second ultraviolet shielding layers 3 and 4 is preferably a polyvinyl acetal resin. Each and every thermoplastic resin contained in each of the heat shielding layer 2 and the first and second ultraviolet shielding layers 3 and 4 is preferably a polyvinyl acetal resin. In this case, the compatibility between the heat shielding layer 2 and the first and second ultraviolet shielding layers 3 and 4 is increased, and the adhesion between the heat shielding layer 2 and the first and second ultraviolet shielding layers 3 and 4 can be further increased.

Each of the heat shielding layer 2 and the first and second ultraviolet shielding layers 3 and 4 preferably contains a plasticizer which is described later. In the case that the thermoplastic resin contained in the first and second ultraviolet shielding layers 3 and 4 is a polyvinyl acetal resin, a combination use of the polyvinyl acetal resin and a plasticizer enables to further increase the adhesion between the heat shielding layer 2 and the first and second ultraviolet shielding layers 3 and 4.

The polyvinyl acetal resin can be produced by acetalizing polyvinyl alcohol with an aldehyde. The polyvinyl alcohol is obtained by saponifying polyvinyl acetate, for example. Generally, the saponification degree of the polyvinyl alcohol is in the range of 80 to 99.8 mol%.

The lower limit of the polymerization degree of the polyvinyl alcohol is preferably 200, and more preferably 500, while the upper limit thereof is preferably 3000, and more preferably 2500. If the polymerization degree is too low, the laminated glass tends to have a decreased penetration resistance. If the polymerization degree is too high, formation of the interlayer film for a laminated glass may be difficult.

The aldehyde is not particularly limited. Generally, a C1 to C10 aldehyde is suitably used as the above aldehyde. Examples of the C1 to C10 aldehyde include n-butyraldehyde, isobutyraldehyde, n-valeraldehyde, 2-ethylbutyl aldehyde, n-hexyl aldehyde, n-octyl aldehyde, n-nonyl aldehyde, n-decyl aldehyde, formaldehyde, acetaldehyde, and benzaldehyde. Particularly, propionaldehyde, n-butyraldehyde, isobutyraldehyde, n-hexyl aldehyde and n-valeraldehyde are preferred, propionaldehyde, n-butyraldehyde, and isobutyraldehyde are more preferred, and n-butyraldehyde is still more preferred. One aldehyde may be used alone, or two or more aldehydes may be used in combination.

In terms of further increasing the adhesion of each layer, the polyvinyl acetal resin preferably has a hydroxyl group content (amount of hydroxyl groups) of the polyvinyl acetal resin in the range of 15 to 40 mol%. The lower limit of the hydroxyl group content is more preferably 18 mol%, and the upper limit thereof is more preferably 35 mol%. If the hydroxyl group content is too low, the adhesion of each layer may be low. If the hydroxyl group content is too high, the flexibility of the interlayer film 1 tends to be low, likely causing a problem in handling of the interlayer film 1.

The hydroxyl content of the polyvinyl acetal resin is a molar fraction (represented in percentage) determined by dividing the amount of ethylene group having the hydroxyl group bonded thereto by the total amount of the ethylene group in the main chain. The amount of ethylene group having the hydroxyl group bonded thereto can be determined, for example, by measuring the amount of ethylene group having the hydroxyl group bonded thereto in the polyvinyl alcohol, which is the raw material, in accordance with JIS K 6726 "Testing methods for polyvinyl alcohol".

The lower limit of the acetylation degree (amount of acetyl groups) of the polyvinyl acetal resin is 0.1 mol%, more preferably 0.3 mol%, and still more preferably 0.5 mol%, while the upper limit thereof is preferably 30 mol%, more preferably 25 mol%, and still more preferably 20 mol%.

If the acetylation degree is too low, the compatibility between the polyvinyl acetal resin and the plasticizer may decrease. If the acetylation degree is too high, the moisture resistance of the interlayer film may be low.

The acetylation degree is a molar fraction (represented in percentage) determined by dividing, by the total amount of ethylene group in the main chain, a value resulting from subtracting the amount of ethylene group having the acetal group bonded thereto and the amount of ethylene group having the hydroxyl group bonded thereto from the total amount of ethylene group in the main chain. The amount of ethylene group having the acetal group bonded thereto can be determined in accordance with JIS K 6728 "Testing Methods for Polyvinyl Butyral", for example.

The lower limit of the acetalization degree (butyralization degree in the case of a polyvinyl butyral resin) of the polyvinyl acetal resin is 60 mol%, and more preferably 63 mol%, while the upper limit thereof is preferably 85 mol%, more preferably 75 mol%, and still more preferably 70 mol%.

If the acetalization degree is too low, the compatibility between the polyvinyl acetal resin and the plasticizer may be low. If the acetalization degree is too high, the reaction time it takes to produce a polyvinyl acetal resin may be long.

The acetalization degree is a molar fraction (represented in percentage) determined by dividing the amount of ethylene group having the acetal group bonded thereto by the total amount of ethylene group in the main chain.

The acetalization degree is calculated by first measuring the acetylation degree (amount of the acetyl group) and the hydroxyl content (vinyl alcohol) based on JIS K 6728 "Testing Methods for Polyvinyl butyral", calculating the molar fraction from the measured values, and subtracting the acetylation degree and hydroxyl group content from 100 mol%.

In the case that the polyvinyl acetal resin is a polyvinyl butyral resin, the acetalization degree (butyralization degree) and the acetylation degree (amount of acetyl group) can be calculated from the results obtained by the method in accordance with JIS K 6728 "Testing Methods for Polyvinyl butyral".

### (Plasticizer)

In terms of further increasing the adhesion of each layer, each of the heat shielding layer 2 and the first and second ultraviolet shielding layers 3 and 4 contains a plasticizer. In the case that the thermoplastic resin contained in each of the heat shielding layer 2 and the first and second ultraviolet shielding layers 3 and 4 is a polyvinyl acetal resin, it is particularly preferable that each of the heat shielding layer 2 and the first and second ultraviolet shielding layers 3 and 4 contains a plasticizer.

The plasticizer is not particularly limited, and may be a conventionally known plasticizer. One plasticizer may be used alone, or two or more plasticizers may be used in combination.

Examples of the plasticizer include organic ester plasticizers such as monobasic organic acid esters and polybasic organic acid esters, and phosphoric acid plasticizers such as organic phosphoric acid plasticizers and organic phosphorous acid plasticizers. Particularly, organic ester plasticizers are preferable. The plasticizer is preferably a liquid plasticizer.

Examples of the monobasic organic acid esters include, but not particularly limited to, glycol esters obtained by the reaction between a glycol and a monobasic organic acid, and esters of triethylene glycol or tripropylene glycol and a monobasic organic acid. Examples of the glycol include triethylene glycol, tetraethylene glycol, and tripropylene glycol. Examples of the monobasic organic acid include butyric acid, isobutyric acid, caproic acid, 2-ethylbutyric acid, heptyl acid, n-octylic acid, 2-ethylhexyl acid, n-nonylic acid, and decyl acid.

Examples of the polybasic organic acid esters include, but not particularly limited to, ester compounds of polybasic acids and C4 to C8 straight or branched alcohols. Examples of the polybasic organic acid include adipic acid, sebacic acid, and azelaic acid.

Examples of the organic ester plasticizer include, but not particularly limited to, triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctylazelate, dibutylcarbitol adipate, ethylene glycol di-2-ethyl butyrate, 1,3-propylene glycol di-2-ethyl butyrate, 1,4-butylene glycol di-2-ethyl butyrate, diethylene glycol di-2-ethyl butyrate, diethylene glycol di-2-ethylhexanoate, dipropylene glycol di-2-ethyl butyrate, triethylene glycol di-2-ethyl pentanoate, tetraethylene glycol di-2-ethyl butyrate, diethylene glycol dicapriate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of phosphate and adipate. Organic ester plasticizers other than these may also be used.

Examples of the organic phosphoric acid plasticizer include, but not particularly limited to, tributoxyethyl phosphate, isodecyl phenyl phosphate, and triisopropyl phosphate.

The plasticizer is preferably at least one selected from triethylene glycol di-2-ethylhexanoate (3GO) and triethylene glycol di-2-ethylbutyrate (3GH), and more preferably triethylene glycol di-2-ethylhexanoate.

The amount of the plasticizer in each of the heat shielding layer 2 and the first and second ultraviolet shielding layers 3 and 4 is not particularly limited. For each 100 parts by weight of the thermoplastic resin, the lower limit of the amount of the plasticizer is preferably 25 parts by weight, and more preferably 30 parts by weight, while the upper limit is preferably 60 parts by weight, and more preferably 50 parts by weight. If the amount of the plasticizer satisfies the preferable lower limit, the penetration resistance of the laminated glass can be further increased. If the amount of the plasticizer satisfies the preferable upper limit, the transparency of the interlayer film 1 can be further increased.

The amount of the plasticizer in the heat shielding layer 2 may be different from the amount of the plasticizer in each of the first and second ultraviolet shielding layers 3 and 4. For example, in the case that the amount of the plasticizer of at least one of the heat shielding layer 2 and the first and second ultraviolet shielding layers 3 and 4 is not less than 55 parts by weight for each 100 parts by weight of the thermoplastic resin, the sound insulation of the laminated glass can be increased.

### (Ultraviolet shielding agent)

Each of the first and second ultraviolet shielding layers 3 and 4 contains an ultraviolet shielding agent. The ultraviolet shielding agent contains an ultraviolet absorbent. The ultraviolet shielding agent is preferably an ultraviolet absorbent.

Examples of a conventionally widely known ultraviolet shielding agent include metal ultraviolet shielding agents, metal oxide ultraviolet shielding agents, benzotriazol ultraviolet shielding agents, benzophenone ultraviolet shielding agents, triazine ultraviolet shielding agents, and benzoate ultraviolet shielding agents.

Examples of the metal ultraviolet absorbents include platinum particles, particles obtained by coating the surfaces of platinum particles with silica, palladium particles, and particles obtained by coating the surfaces of palladium particles with silica. The ultraviolet shielding agent is preferably not heat shielding particles. The ultraviolet shielding agent is preferably a benzotriazol ultraviolet shielding agent, a benzophenone ultraviolet shielding agent, a triazine ultraviolet shielding agent, or a benzoate ultraviolet shielding agent, and more preferably a benzotriazol ultraviolet absorbent.

Examples of the metal oxide ultraviolet absorbent include zinc oxide, titanium oxide, and cerium oxide. The surface of the metal oxide ultraviolet absorbent may be coated. The coating material for the surface of the metal oxide ultraviolet absorbent may be, for example, an insulating metal oxide, a hydrolyzable organic silicon compound, or a silicone compound.

Examples of the insulating metal oxide include silica, alumina, and zirconia. The insulating metal oxide has a band gap energy of not less than 5.0 eV, for example.

Examples of the benzotriazol ultraviolet absorbent include benzotriazol ultraviolet absorbents such as 2-(2'-hydroxy-5'-methylphenyl)benzotriazol ("Tinuvin P" produced by BASF A.G.), 2-(2'-hydroxy-3',5'-di-t-buthylphenyl)benzotriazol ("Tinuvin 320" produced by BASF A.G.), 2-(2'-hydroxy-3'-t-butyl-5-methylphenyl)-5-chlorobenzotriazole ("Tinuvin 326" produced by BASF A.G.), and 2-(2'-hydroxy-3',5'-di-amylphenyl)benzotriazol ("Tinuvin 328" produced by BASF A.G.). The ultraviolet shielding agent is preferably a benzotriazol ultraviolet absorbent containing a halogen atom for the excellent ability of absorbing ultraviolet rays, and more preferably a benzotriazol ultraviolet absorbent containing a chlorine atom.

Examples of the benzophenone ultraviolet absorbent include octabenzone ("Chimassorb 81" produced by BASF A.G.). Examples of the triazine ultraviolet absorbent include 2-(4,6-diphenyl-1,3,5-triazine-2-yl)-5-[(hexyl)oxy]-phenol ("Tinuvin 1577FF" produced by BASF A.G.).

Examples of the benzoate ultraviolet absorbent include 2,4-di-tert-buthylphenyl-3,5-di-tert-butyl-4-hydroxy benzoate ("tinuvin 120" produced by BASF A.G.).

The ultraviolet shielding agent contained in each of the first and second ultraviolet shielding layers 3 and 4 is suitably selected such that the ultraviolet transmittance of each of the first and second ultraviolet shielding layers 3 and 4 or the interlayer film 1 is within a preferable range. The ultraviolet shielding agent contained in the first and second ultraviolet shielding layers 3 and 4 is preferably suitably selected such that the ultraviolet transmittance of the first and second ultraviolet shielding layers 3 and 4 or the interlayer film 1 is not more than the value described above at a wavelength of 360 to 400 nm, a wavelength of 360 to 390 nm, or a wavelength of 380 to 390 nm.

The heat shielding layer 2 may or may not contain the ultraviolet shielding agent 3. The heat shielding layer 2 preferably contains an ultraviolet shielding agent in terms of further decreasing the ultraviolet transmittance of the interlayer film 1 at a wavelength of 360 to 400 nm, a wavelength of 360 to 390 nm, or a wavelength of 380 to 390 nm.

In terms of further decreasing the ultraviolet transmittance of the first and second ultraviolet shielding layers 3 and 4 or the interlayer film 1, the ultraviolet shielding agent is preferably 2-(2'-hydroxy-3'-t-butyl-5-methylphenyl)-5-chlorobenzotriazole ("Tinuvin 326" produced by BASF A.G.) or 2-(2'-hydroxy-3',5'-di-amylphenyl)benzotriazol ("Tinuvin 328" produced by BASF A.G.), and more preferably 2-(2'-hydroxy-3'-t-butyl-5-methylphenyl)-5-chlorobenzotriazole.

The amount of the ultraviolet shielding agent in each of the heat shielding layer 2 and the first and second ultraviolet shielding layers 3 and 4 is not particularly limited. In terms of further increasing the heat shielding properties at the initial stage and after a lapse of time, the lower limit of the amount of the ultraviolet shielding agent is preferably 0.3 parts by weight, more preferably 0.4 parts by weight, and still more preferably 0.5 parts by weight for each 100 parts by weight of the thermoplastic resin, while the upper limit thereof is preferably 3 parts by weight, more preferably 2.5 parts by weight, and still more preferably 2 parts by weight for each 100 parts by weight of the thermoplastic resin.

In terms of further increasing the heat shielding properties at the initial stage and after a lapse of time, the amount of the ultraviolet shielding agent based on 100 wt% of the ultraviolet shielding layer is preferably not less than 0.1 wt%, more preferably not less than 0.2 wt%, still more preferably not less than 0.3 wt%, and particularly preferably not less than 0.5 wt%, while the amount is preferably not more than 2.5 wt%, more preferably not more than 2 wt%, still more preferably not more than 1 wt%, and particularly preferably not more than 0.8 wt%. Particularly in the case that the amount of the ultraviolet shielding agent is not less than 0.2 wt% based on 100 wt% of the ultraviolet shielding layer, a decrease in the heat shielding properties of the laminated glass after a lapse of time can be greatly prevented.

In terms of further increasing the heat shielding properties at the initial stage and after a lapse of time, the amount of the ultraviolet shielding agent based on 100 wt% of the heat shielding layer is preferably not less than 0.1 wt%, more preferably not less than 0.2 wt%, still more preferably not less than 0.3 wt%, and particularly preferably not less than 0.5 wt%, while the amount is preferably not more than 2.5 wt%, more preferably not more than 2 wt%, still more preferably not more than 1 wt%, and particularly preferably not more than 0.8 wt%. Particularly in the case that the amount of the ultraviolet shielding agent is not less than 0.3 wt% based on 100 wt% of the heat shielding layer, a decrease in the heat shielding properties of the laminated glass after a lapse of time can be greatly prevented.

### (Heat shielding particles)

The heat shielding layer 2 contains heat shielding particles. Each of the first and second ultraviolet shielding layers 3 and 4 may or may not contain heat shielding particles. In terms of further increasing the heat shielding properties of the laminated glass, each of the first and second ultraviolet shielding layers 3 and 4 preferably contains heat shielding particles.

The heat shielding particles are preferably particles formed from metal oxides. One kind of heat shielding particles may be used alone, or two or more kinds of heat shielding particles may be used in combination.

Infrared rays having a wavelength not less than 780 nm which is longer than that of visible light have a small amount of energy compared with ultraviolet rays. The infrared rays, however, have a large thermal effect, and are emitted as heat once absorbed by a substance. For this reason, the infrared rays are commonly referred to as heat rays. The use of the heat shielding particles enables to effectively block the infrared rays (heat rays). The term "heat shielding particles" means particles that can absorb infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungstic oxide particles, rubidium-doped tungsten oxide particles, tin-doped indium oxide particles (ITO particles), tin-doped zinc oxide particles, and silicon-doped zinc oxide particles; and lanthanum hexaboride (LaB₆) particles. Heat shielding particles other than these may also be used. For high heat shielding properties, the heat shielding particles are preferably metal oxide particles, more preferably ATO particles, GZO particles, IZO particles, ITO particles, or cesium-doped tungsten oxide particles, and still more preferably ITO particles.

Particularly, tin-doped indium oxide particles (ITO particles) are preferable because they have high heat shielding properties and are easily available.

The lower limit of the average particle size of the heat shielding particles is 0.01 µm, and more preferably 0.02 µm, and the upper limit thereof is 0.1 µm, and more preferably 0.05 µm. If the average particle size satisfies the preferable lower limit, the heat shielding properties can be sufficiently increased. If the average particle size satisfies the preferable upper limit, the dispersibility of the heat shielding particles can be increased.

The above "average particle size" means a volume-average particle size. The average particle size can be measured using a particle size distribution measuring device ("UPA-EX 150" produced by Nikkiso Co., Ltd.) or the like.

The amount of the heat shielding particles in each of the heat shielding layer 2 and the first and second ultraviolet shielding layers 3 and 4 is not particularly limited. For each 100 parts by weight of the thermoplastic resin, the lower limit of the amount of the heat shielding particles is preferably 0.01 parts by weight, and more preferably 0.1 parts by weight, while the upper limit thereof is preferably 3 parts by weight, and more preferably 2 parts by weight. If the amount of the heat shielding particles in each of the heat shielding layer 2 and the first and second ultraviolet shielding layers 3 and 4 is in the above preferable range, the heat shielding properties can be sufficiently increased, the solar transmittance (Ts2500) can be sufficiently decreased, the Tts can be sufficiently decreased, and the visible transmittance can be sufficiently increased. For example, the above Tts can be made not more than 50%, and the visible transmittance can be made not less than 70%.

The amount of the heat shielding particles in each of the heat shielding layer 2 and the first and second ultraviolet shielding layers 3 and 4 is not particularly limited. The amount of the heat shielding particles based on 100 wt% of the heat shielding layer and the first and second ultraviolet shielding layers is preferably not less than 0.01 wt%, more preferably not less than 0.1 wt%, still more preferably not less than 1 wt%, and particularly preferably not less than 1.5 wt%, while the amount is preferably not more than 6 wt%, more preferably not more than 5.5 wt%, still more preferably not more than 4 wt%, particularly preferably not more than 3.5 wt%, and most preferably not more than 3.0 wt%. If the amount of the heat shielding particles in each of the heat shielding layer 2 and the first and second ultraviolet shielding layers 3 and 4 is in the above preferable range, the heat shielding properties can be sufficiently increased, the solar transmittance (Ts2500) can be sufficiently decreased, the Tts can be sufficiently decreased, and the visible transmittance can be sufficiently increased.
For example, the visible transmittance of a laminated glass including the interlayer film for a laminated glass according to the present invention can be made not less than 70%.

### (Component X)

The heat shielding layer 2 contains the component X. The component X is at least one component selected from a phthalocyanine compound, a naphthalocyanine compound, and an anthracyanine compound.

The component X is not particularly limited. The component X may be a conventionally known phthalocyanine compound, naphthalocyanine compound, or anthracyanine compound. One kind of the component X may be used alone, or two or more kinds of the component X may be used in combination.

The combination use of the heat shielding particles and the component X enables to sufficiently block the infrared rays (heat rays). The combination use of the metal oxide particles and the component X enables to more effectively block the infrared rays. The combination use of the ITO particles and the component X enables to even more effectively block the infrared rays.

Examples of the component X include phthalocyanine, a phthalocyanine derivative, naphthalocyanine, a naphthalocyanine derivative, anthracyanine, and an anthracyanine derivative. Each of the phthalocyanine compound and the phthalocyanine derivative preferably has a phthalocyanine skeleton. Each of the naphthalocyanine compound and the naphthalocyanine derivative preferably has a naphthalocyanine skeleton. Each of the anthracyanine compound and the anthracyanine derivative preferably has an anthracyanine skeleton.

In terms of further increasing the heat shielding properties, sufficiently decreasing the solar transmittance (Ts2500), sufficiently decreasing the Tts, and sufficiently increasing the visible transmittance regarding the interlayer film and the laminated glass, the component X is preferably at least one selected from the group consisting of phthalocyanine, a phthalocyanine derivative, naphthalocyanine, and a naphthalocyanine derivative.

In terms of effectively increasing the heat shielding properties and maintaining the visible transmittance at an even higher level for a long period of time, the component X preferably contains vanadium atoms or copper atoms, and more preferably contains vanadium atoms. The component X is preferably at least one selected from a phthalocyanine derivative containing vanadium atoms or copper atoms and a naphthalocyanine derivative containing vanadium atoms or copper atoms. In terms of further increasing the heat shielding properties of the interlayer film and the laminated glass, the component X preferably has a structure in which vanadium atoms are contained.

The amount of the component X in each of the heat shielding layer 2 and the first and second ultraviolet shielding layers 3 and 4 is not particularly limited. For each 100 parts by weight of the thermoplastic resin, the lower limit of the amount of the component X is preferably 0.0005 parts by weight, and more preferably 0.003 parts by weight, while the upper limit thereof is preferably 0.1 parts by weight, and more preferably 0.05 parts by weight. If the amount of the component X in the heat shielding layer 2 is in the above preferable range, the heat shielding properties can be sufficiently increased, the solar transmittance (Ts2500) can be sufficiently decreased, the Tts can be sufficiently decreased, and the visible transmittance can be sufficiently increased. For example, the Tts can be made not more than 50%, and the visible transmittance can be made not less than 70%.

The amount of the component X based on 100 wt% of the heat shielding layer and the first and second ultraviolet shielding layers is preferably not less than 0.001 wt%, more preferably not less than 0.005 wt%, still more preferably not less than 0.05 wt%, and particularly preferably not less than 0.1 wt%, while the amount is preferably not more than 0.2 wt%, more preferably not more than 0.18 wt%, still more preferably not more than 0.16 wt%, and particularly preferably not more than 0.15 wt%. If the amount of the component X in the first heat shielding layer is in the range of the above lower limit to the above upper limit, the heat shielding properties can be sufficiently increased, the solar transmittance (Ts2500) can be sufficiently decreased, the Tts can be sufficiently decreased, and the visible transmittance can be sufficiently increased. For example, the visible transmittance can be made not less than 70%.

### (Other components)

Each of the heat shielding layer 2 and the first and second ultraviolet shielding layers 3 and 4 may optionally contain additives such as an antioxidant, a light stabilizer, a flame retardant, an antistatic agent, a pigment, a dye, an adhesion adjuster, a moisture resistance agent, a fluorescent brightener, and an infrared absorber. Each of these additives may be used alone, or two or more of these may be used in combination.

### (Laminated glass)

The interlayer film for a laminated glass according to the present invention is used for producing a laminated glass.

Fig. 2 illustrates a laminated glass including the interlayer film 1 illustrated in Fig. 1.

A laminated glass 11 illustrated in Fig. 2 includes the interlayer film 1 and the first and second laminated glass components 12 and 13. The interlayer film 1 is an interlayer film for a laminated glass. The interlayer film 1 is sandwiched between the first and second laminated glass components 12 and 13. Therefore, the laminated glass 11 has the first laminated glass component 12, the interlayer film 1, and the second laminated glass component 13 laminated in this order. The first laminated glass component 12 is laminated on a surface 3a on the outer side of the first ultraviolet shielding layer 3. The second laminated glass component 13 is laminated on a surface 4a on the outer side of the second ultraviolet shielding layer 4.

Examples of the first and second laminated glass components 12 and 13 include glass plates and PET (polyethylene terephthalate) films. The laminated glass 11 includes not only a laminated glass having an interlayer film sandwiched between two glass plates therein but also a laminated glass having an interlayer film sandwiched between a glass plate and a PET film or the like therein. The laminated glass 11 is a glass plate-containing laminated product, and preferably includes at least one glass plate.

Examples of the glass plate include plates of inorganic glass and plates of organic glass. Examples of the inorganic glass include float plate glass, heat absorbing glass, heat reflecting glass, polished plate glass, molded plate glass, meshed plate glass, wired plate glass, and green glass. The inorganic glass is preferably heat absorbing glass. Heat absorbing glass is defined under JIS R 3208. The organic glass is synthetic resin glass substituted for inorganic glass. Examples of the organic glass include polycarbonate plates and poly(meth)acrylate resin plates. Examples of the poly(meth)acrylate resin plates include polymethyl (meth)acrylate resin plates.

The thickness of each of the first and second laminated glass components 12 and 13 is preferably not less than 1 mm, while the thickness is preferably not more than 5 mm, and more preferably not more than 3 mm. In the case that the laminated glass components 12 and 13 are glass plates, the thickness of each of the glass plates is preferably not less than 1 mm, while the thickness is preferably not more than 5 mm, and more preferably not more than 3 mm. In the case that the laminated glass components 12 and 13 are PET films, the thickness of each of the PET films is preferably in the range of 0.03 to 0.5 mm.

The production method of the laminated glass 1 is not particularly limited. For example, the interlayer film 1 is sandwiched between the first and second laminated glass components 12 and 13, and the resulting product is pressed by a pressing roll or vacuumed under reduced pressure in a rubber bag so that the air remaining between the first and second laminated glass components 12 and 13 and the interlayer film 1 is removed. Thereafter, a laminated product is obtained by preliminary adhesion at about 70°C to 110°C. Next, a laminated product is put in an autoclave or is pressed, and the laminated product is pressure-bonded at about 120°C to 150°C under a pressure of 1 to 1.5 MPa. Thereby, the laminated glass 11 can be obtained.

The laminated glass 11 can be used for cars, railcars, aircrafts, boats and ships, and buildings. The laminated glass 11 can be used for windshields, side glass, rear glass, or roof glass of cars. The laminated glass 11 can be used for applications other than these applications. Since the laminated glass 11 has high heat shielding properties, low solar transmittance (Ts2500), low Tts and high visible transmittance, the laminated glass 11 is used suitably for cars.

In terms of obtaining a laminated glass having better heat shielding properties, the Tts of the laminated glass 11 is preferably not more than 53%, preferably not more than 50%, and preferably not more than 40%.

In terms of obtaining a laminated glass having an even better transparency, the visible transmittance of the laminated glass 11 is preferably not less than 65%, and more preferably not less than 70%. The visible transmittance of a laminated glass can be measured in accordance with JIS R 3211 (1998). The visible transmittance of a laminated glass obtained by sandwiching the interlayer film for a laminated glass according to the present invention between the two 2-mm-thick float glass plates in accordance with JIS R 3202 is preferably not less than 70%.

The solar transmittance (Ts2500) of the laminated glass is preferably not more than 65%, and more preferably not more than 50%. The solar transmittance of a laminated glass can be measured in accordance with JIS R 3106 (1998). The solar transmittance of a laminated glass obtained by sandwiching the interlayer film for a laminated glass according to the present invention between the two 2-mm-thick float glass plates in accordance with JIS R 3202 is preferably not more than 65%, more preferably not more than 60%, and still more preferably not more than 50%.

The haze value of a laminated glass is preferably not more than 2%, more preferably not more than 1%, still more preferably not more than 0.5%, and particularly preferably not more than 0.4%. Since the interlayer film for a laminated glass according to the present invention includes a heat shielding layer and an ultraviolet shielding layer, the interlayer film contributes to a decrease in the haze value of the laminated glass. The haze value of the laminated glass can be measured in accordance with JIS K 6714.

Hereinafter, the present invention is described in more detail based on examples. The present invention is not limited to the following examples.

In the examples and comparative examples, the following materials were used.

### Thermoplastic resin:

PVB1 (polyvinyl butyral resin acetalized with n-butyraldehyde, average polymerization degree: 2300, hydroxyl group content: 22 mol%, acetylation degree: 12 mol%, butyralization degree: 66 mol%)
PVB2 (polyvinyl butyral resin acetalized with n-butyraldehyde, average polymerization degree: 1700, hydroxyl group content: 30.5 mol%, acetylation degree: 1 mol%, butyralization degree: 68.5 mol%)

### Plasticizer:

3GO (triethylene glycol di-2-ethylhexanoate)

### Heat shielding particles:

ITO (ITO particles, product of Mitsubishi Materials Corporation)
ATO (ATO particles, "SN-100P" produced by Ishihara Sangyo Kaisha, Ltd., BET value: 70 m²/g)
GZO (GZO particles, "FINEX-50" produced by Sakai Chemical Industry Co., Ltd., BET value: 50 m²/g)

### Component X:

IR-906 (vanadyl phthalocyanine compound containing vanadium atoms and oxygen atoms, "EXCOLOR 906" produced by NIPPON SHOKUBAI Co., Ltd.)
IR-915 (vanadyl phthalocyanine compound containing vanadium atoms, "EXCOLOR 915" produced by NIPPON SHOKUBAI Co., Ltd.)
IRSORB 203 (copper naphthalocyanine compound produced by FUJIFILM Corporation)

### Ultraviolet shielding agent:

Tinuvin 326 (2-(2'-hydroxy-3'-t-butyl-5-methylphenyl)-5-chlorobenzotriazole, "Tinuvin 326" produced by BASF A.G.)

### (Example 1)

### (1) Production of heat shielding layer

Triethylene glycol di-2-ethylhexanoate (3GO) (60 parts by weight), Tinuvin 326 (0.625 wt% based on 100 wt% of the heat shielding layer to be obtained), ITO (1.52 wt% based on 100 wt% of the heat shielding layer to be obtained), and IR-906 (0.122 wt% based on 100 wt% of the heat shielding layer to be obtained) were mixed. To the mixture was added a phosphate ester compound as a dispersant. The resulting mixture was mixed in a horizontal micro-bead mill, so that a dispersion was obtained. The volume-average particle size of the ITO particles in the dispersion was 35 nm. The amount of the phosphate ester compound was adjusted to be 1/10 of the amount of the heat shielding particles.

The whole amount of the dispersion was added to 100 parts by weight of a polyvinyl butyral resin (PVB1), and the mixture was sufficiently kneaded in a mixing roll. Thereby, a first composition was obtained.

### (2) Production of ultraviolet shielding layer

Triethylene glycol di-2-ethylhexanoate (3GO) (40 parts by weight) and Tinuvin 326 (0.571 wt% based on 100 wt% of the ultraviolet shielding layer to be obtained) were mixed in a horizontal micro bead mill, so that a dispersion was obtained.

The whole amount of the obtained dispersion was added to 100 parts by weight of a polyvinyl butyral resin (PVB2), and the mixture was sufficiently kneaded in a mixing roll. Thereby, a second composition was obtained.

### (3) Production of interlayer film for laminated glass

The obtained first composition and second composition were co-extruded using an extruder, and a laminated product having a three-layer structure of ultraviolet shielding layer/heat shielding layer/ultraviolet shielding layer was obtained. The thickness of the ultraviolet shielding layer was 330 µm and the thickness of the heat shielding layer was 100 µm. Hence, an interlayer film having a 760-µm thick three-layer structure was obtained.

### (4) Production of laminated glass

The obtained interlayer film was cut into a size of 30 cm in length x 30 cm in width. Next, two float glass plates (30 cm in length x 30 cm in width x 2 mm in thickness) in accordance with JIS R 3202 were prepared. The obtained interlayer film was sandwiched between these two float glass plates. The resulting product was retained in a vacuum laminator at 90°C for 30 minutes and then vacuum pressed, so that a laminated product was obtained. The portion of the interlayer film protruding out of the glass plates was cut off, whereby a laminated glass was obtained.

### (Examples 2 to 10)

A heat shielding layer and an ultraviolet shielding layer were produced in the same manner as in Example 1, except that the kinds and amounts of the thermoplastic resin, plasticizer, heat shielding particles, component X, and ultraviolet shielding agent were changed to those shown in the following Table 1. Using the obtained heat shielding layer and ultraviolet shielding layer, a laminated glass including an interlayer film having a three-layer structure was produced in the same manner as in Example 1. Also in Examples 2 to 10, the amount of the phosphate ester was adjusted to be 1/10 of the amount of the heat shielding particles in production of a heat shielding layer.

### (Example 11)

### (1) Production of heat shielding layer

Triethylene glycol di-2-ethylhexanoate (3GO) (40 parts by weight), Tinuvin 326 (0.571 wt% based on 100 wt% of the heat shielding layer to be obtained), ITO (3.04 wt% based on 100 wt% of the heat shielding layer to be obtained), and IR-915 (0.129 wt% based on 100 wt% of the heat shielding layer to be obtained) were mixed. To the mixture was added a phosphate ester compound as a dispersant. The resulting mixture was mixed in a horizontal micro-bead mill, so that a dispersion was obtained. The volume-average particle size of the ITO particles in the dispersion was 35 nm. The amount of the phosphate ester compound was adjusted to be 1/10 of the amount of the heat shielding particles.

The whole amount of the obtained dispersion was added to 100 parts by weight of a polyvinyl butyral resin (PVB2), and the mixture was sufficiently kneaded in a mixing roll. Thereby, a first composition was obtained.

### (2) Production of ultraviolet shielding layer

Triethylene glycol di-2-ethylhexanoate (3GO) (40 parts by weight) and Tinuvin 326 (0.714 wt% based on 100 wt% of the ultraviolet shielding layer to be obtained) were mixed in a horizontal micro bead mill, so that a dispersion was obtained.

The whole amount of the obtained dispersion was added to 100 parts by weight of a polyvinyl butyral resin (PVB2), and the mixture was sufficiently kneaded in a mixing roll. Thereby, a second composition was obtained.

### (3) Production of interlayer film for laminated glass

The obtained first composition and second composition were co-extruded using an extruder, and a laminated product having a two-layer structure of ultraviolet shielding layer/heat shielding layer was obtained. The thickness of the ultraviolet shielding layer was 660 µm and the thickness of the heat shielding layer was 100 µm. Hence, an interlayer having a 760-µm thick two-layer structure was obtained.

### (4) Production of laminated glass

A laminated glass was obtained in the same manner as in Example 1, except that the obtained interlayer film was used.

### (Example 12)

A heat shielding layer and an ultraviolet shielding layer were produced in the same manner as in Example 11, except that the thickness of each of the heat shielding layer and the ultraviolet shielding layer was changed to the value shown in the following Table 1. Also in Example 12, the amount of the phosphate ester was adjusted to be 1/10 of the amount of heat shielding particles in production of a heat shielding layer.

An interlayer film having a two-layer structure and a laminated glass were obtained in the same manner as in Example 11, except that the obtained heat shielding layer and ultraviolet shielding layer were used.

### (Reference Example 1)

Triethylene glycol di-2-ethylhexanoate (3GO) (40 parts by weight), ITO (0.20 wt% based on 100 wt% of the interlayer film to be obtained), Tinuvin 326 (0.625 wt% based on 100 wt% of the interlayer film to be obtained), and IR-906 (0.016 wt% based on 100 wt% of the interlayer film to be obtained) were mixed. To the mixture was added a phosphate ester compound as a dispersant. The resulting mixture was mixed in a horizontal micro-bead mill, so that a dispersion was obtained. The amount of the phosphate ester compound was adjusted to be 1/10 of the amount of the heat shielding particles.

The whole amount of the obtained dispersion was added to 100 parts by weight of a polyvinyl butyral resin (PVB2), and the mixture was sufficiently kneaded in a mixing roll. Thereby, a composition was obtained.

The obtained composition was extruded to give a single-layer interlayer film having a thickness of 760 µm.

Using the obtained interlayer film, a laminated glass including a single-layer interlayer film was obtained in the same manner as in Example 1.

### (Reference Examples 2 to 4, Comparative Examples 1 to 7, and Reference Example 5)

An interlayer film was produced in the same manner as in Reference Example 1, except that the kinds and amounts of the thermoplastic resin, plasticizer, heat shielding particles, ultraviolet shielding agent, and component X were changed to those shown in the following Table 2. Using the interlayer film, a laminated glass including a single-layer interlayer film was obtained.

The amount of the phosphate ester compound was adjusted to be 1/10 of the amount of the heat shielding particles also in Reference Examples 2 to 4, Comparative Examples 6 and 7, and Reference Example 5. No phosphate ester compound was used in Comparative Examples 1 to 5.

In Reference Examples 1 to 5, the heat shielding particles and the component X were contained in the same layer (interlayer film). In Comparative Examples 1 to 4, no heat shielding particles were used and the component X was blended. In Comparative Example 5, neither the heat shielding particles nor the component X was blended. In Comparative Examples 6 and 7, the heat shielding particles were blended but the component X was not blended.

### (Evaluation)

### (1) Measurement of ultraviolet transmittance (360 to 400 nm), (360 to 390 nm), and (380 to 390 nm)

The ultraviolet shielding layer (one layer) used to obtain the interlayer film of each of the examples was produced. Also, the interlayer film of each of the examples and the comparative examples was prepared. The ultraviolet transmittance of each of the ultraviolet shielding layer and the interlayer film at a wavelength of 360 to 400 nm, a wavelength of 360 to 390 nm, and a wavelength of 380 to 390 nm was measured using a spectrophotometer ("U-4100" produced by Hitachi High-Technologies Corporation) in accordance with JIS R 3211 (1998).

### (2) Measurement of visible transmittance (A light Y value, initial A-Y (380 to 780 nm))

The visible transmittance of the obtained laminated glass at a wavelength of 380 to 780 nm was measured using a spectrophotometer ("U-4100" produced by Hitachi High-Technologies Corporation) in accordance with JIS R 3211 (1998).

### (3) Measurement of solar transmittance (initial Ts2500 (300 to 2500 nm))

The solar transmittance Ts (Ts2500) of the obtained laminated glass at a wavelength of 300 to 2500 nm was measured using a spectrophotometer ("U-4100" produced by Hitachi High-Technologies Corporation) in accordance with JIS R 3106 (1998).

### (4) Measurement of light transmission (initial T850 (850 nm), initial T900 (900 nm), and initial T950(nm))

The light transmittances (T850 (850 nm), T900 (900 nm), and T950 (950 nm)) of the obtained laminated glass at a wavelength of 850 nm, 900 nm, and 950 nm were measured using a spectrophotometer ("U-4100" produced by Hitachi High-Technologies Corporation) in accordance with JIS R 3106 (1998).

### (5) Measurement of yellowness (C light YI: yellow index)

The yellowness (yellow index) of the obtained laminated glass was measured using a spectrophotometer ("U-4100" produced by Hitachi High-Technologies Corporation) by a transmission method in accordance with JIS K 7105.

### (6) Measurement of haze value

The haze value of the obtained laminated glass was measured using a haze meter ("TC-HIIIDPK" by Tokyo Denshoku Co., Ltd.) in accordance with JIS K 6714.

### (7) Long-term stability (light resistance)

Using an ultraviolet lamp ("HLG-2S" produced by Suga Test Instruments Co., Ltd.) or the like, the laminated glass was irradiated with ultraviolet rays (quartz glass mercury lamp (750 W)) for 500 hours and 100 hours in accordance with JIS R 3205. The A-Y, Ts2500, T850, T900, T950, and C light YI after the 500-hour irradiation and 1000-hour irradiation were measured by the above methods. In Examples 11 and 12, the ultraviolet rays were radiated from the first ultraviolet shielding layer side.

From the obtained measurement values, ΔA-Y ((A-Y after the ultraviolet irradiation) - (initial A-Y)), ΔTs2500 (Ts2500 after ultraviolet irradiation - initial Ts2500), ΔT850 (T850 after ultraviolet irradiation - initial T850), ΔT900 (T900 after ultraviolet irradiation - initial T900), ΔT950 (T950 after ultraviolet irradiation - initial T950), and C light Δ YI (C light YI after ultraviolet irradiation - initial C light YI) were calculated.

The following Tables 1 and 2 show the compositions of the interlayer films and the following Tables 3 to 5 show the evaluation results. The compounding amount of the plasticizer in Tables 1 and 2 indicates the amount (parts by weight) of the plasticizer for each 100 parts by weight of the thermoplastic resin. The compounding amount of each of the heat shielding particles, component X and ultraviolet shielding agent in Table 1 indicates the amount (wt%) of each of the heat shielding particles, component X and ultraviolet shielding agent based on 100 wt% of the heat shielding layer or ultraviolet shielding layer. The compounding amount of each of the heat shielding particles, component X and ultraviolet shielding agent in Table 2 indicates the amount of each of the heat shielding particles, component X and ultraviolet shielding agent based on 100 wt% of the interlayer film. In Tables 1 and 2, the amount of the phosphate ester compound is omitted.

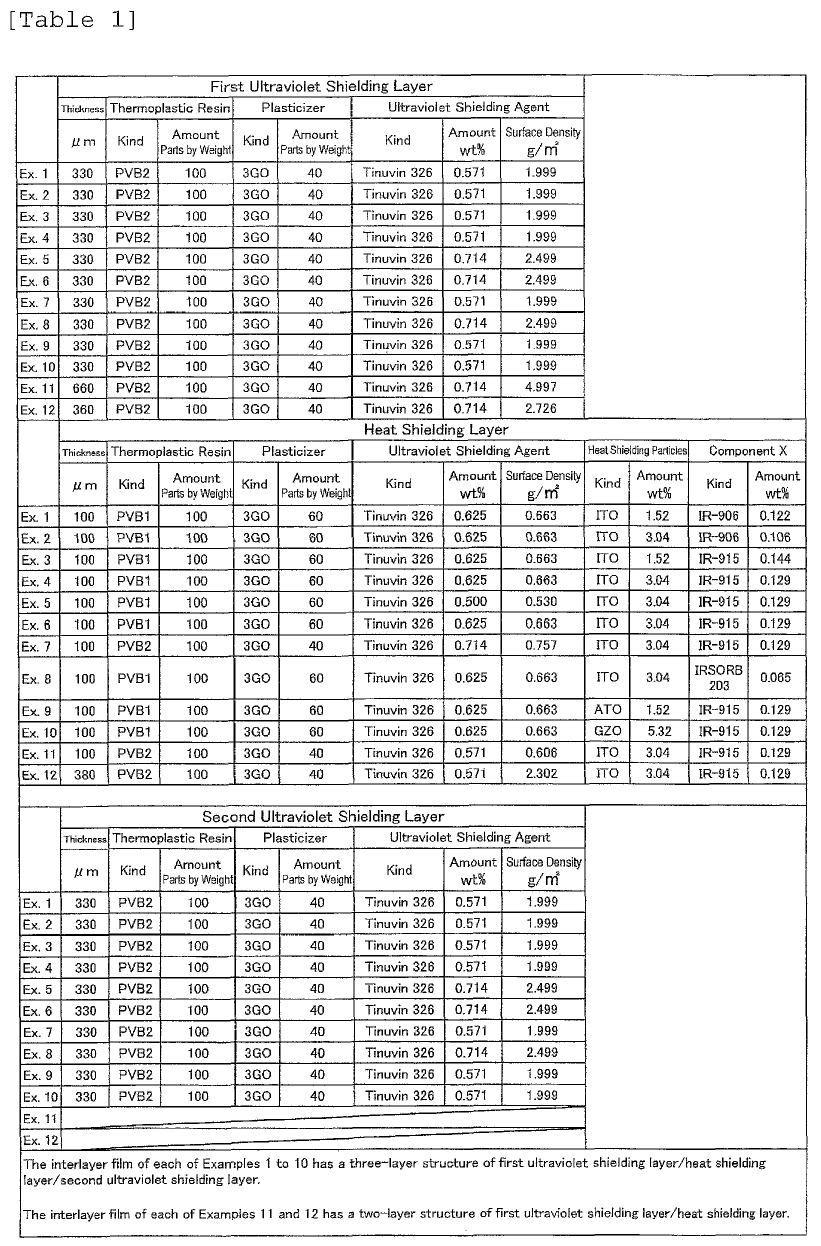

**[Table 2]**

| | Interlayer Film | | | | | | | | | | | |
|---|---|---|---|---|---|---|---|---|---|---|---|---|
| | Thickness | Thermoplastic Resin | | Plasticizer | | Heat Shielding Particles | | Ultraviolet Shielding Agent | | | Component X | |
| | *µ*m | Kind | Amount Parts by Weight | Kind | Amount Parts by Weight | Kind | Amount wt% | Kind | Amount wt% | Surface Density g/m² | Kind | Amount wt% |
| Ref. Ex. 1 | 760 | PVB2 | 100 | 3GO | 40 | ITO | 0.20 | Tinuvin 326 | 0.625 | 5.035 | IR-906 | 0.016 |
| Ref. Ex. 2 | 760 | PVB2 | 100 | 3GO | 40 | ITO | 0.40 | Tinuvin 326 | 0.625 | 5.035 | IR-906 | 0.014 |
| Ref. Ex. 3 | 760 | PVB2 | 100 | 3GO | 40 | ITO | 0.20 | Tinuvin 326 | 0.625 | 5.035 | IR-915 | 0.019 |
| Ref. Ex. 4 | 760 | PVB2 | 100 | 3GO | 40 | ITO | 0.40 | Tinuvin 326 | 0.625 | 5.035 | IR-915 | 0.017 |
| Comp. Ex. 1 | 760 | PVB2 | 100 | 3GO | 40 | | | Tinuvin 326 | 0.625 | 5.035 | IR-906 | 0.016 |
| Comp. Ex. 2 | 760 | PVB2 | 100 | 3GO | 40 | | | Tinuvin 326 | 0.625 | 5.035 | IR-906 | 0.014 |
| Comp. Ex. 3 | 760 | PVB2 | 100 | 3GO | 40 | | | Tinuvin 326 | 0.625 | 5.035 | IR-915 | 0.019 |
| Comp. Ex. 4 | 760 | PVB2 | 100 | 3GO | 40 | | | Tinuvin 326 | 0.625 | 5.035 | IR-915 | 0.017 |
| Comp. Ex. 5 | 760 | PVB2 | 100 | 3GO | 40 | | | Tinuvin 326 | 0.625 | 5.035 | | |
| Comp. Ex. 6 | 760 | PVB2 | 100 | 3GO | 40 | ITO | 0.20 | Tinuvin 326 | 0.625 | 5.035 | | |
| Comp. Ex. 7 | 760 | PVB2 | 100 | 3GO | 40 | ITO | 0.40 | Tinuvin 326 | 0.625 | 5.035 | | |
| Ref. Ex. 5 | 760 | PVB2 | 100 | 3GO | 40 | ITO | 0.40 | Tinuvin 326 | 0.625 | 5.035 | IRSORB 203 | 0.009 |
| The interlayer film of each of Reference Examples 1 to 5 and Comparative Examples 1 to 7 is a single-layer interlayer film. | | | | | | | | | | | | |

**[Table 3]**

| | Evaluation | | | | | | | | | | | |
|---|---|---|---|---|---|---|---|---|---|---|---|---|
| | Ultraviolet Transmittance of Interlayer Film | | | | | | | | | | | |
| | T360 | T365 | T370 | T375 | T380 | T385 | T390 | T395 | T400 | Ultraviolet Transmittance at 360-400 nm | Ultraviolet Transmittance at 360-390 nm | Ultraviolet Transmittance at 380-390 nm |
| | % | % | % | % | % | % | % | % | % | % | % | % |
| Ex. 1 | 0.009 | 0.008 | 0.008 | 0.009 | 0.010 | 0.014 | 0.027 | 0.274 | 3.520 | 0.431 | 0.012 | 0.017 |
| Ex. 2 | 0.009 | 0.008 | 0.008 | 0.009 | 0.010 | 0.014 | 0.027 | 0.274 | 3.520 | 0.431 | 0.012 | 0.017 |
| Ex. 3 | 0.009 | 0.008 | 0.008 | 0.009 | 0.010 | 0.014 | 0.027 | 0.274 | 3.520 | 0.431 | 0.012 | 0.017 |
| Ex. 4 | 0.009 | 0.008 | 0.008 | 0.009 | 0.010 | 0.014 | 0.027 | 0.274 | 3.520 | 0.431 | 0.012 | 0.017 |
| Ex. 5 | 0.009 | 0.008 | 0.008 | 0.009 | 0.010 | 0.014 | 0.027 | 0.274 | 3.520 | 0.431 | 0.012 | 0.017 |
| Ex. 6 | 0.009 | 0.008 | 0.007 | 0.009 | 0.010 | 0.014 | 0.023 | 0.164 | 2.613 | 0.317 | 0.011 | 0.016 |
| Ex. 7 | 0.009 | 0.008 | 0.008 | 0.009 | 0.010 | 0.014 | 0.027 | 0.274 | 3.520 | 0.431 | 0.012 | 0.017 |
| Ex. 8 | 0.009 | 0.008 | 0.007 | 0.009 | 0.010 | 0.014 | 0.023 | 0.164 | 2.613 | 0.317 | 0.011 | 0.016 |
| Ex. 9 | 0.009 | 0.008 | 0.008 | 0.009 | 0.010 | 0.014 | 0.027 | 0.274 | 3.520 | 0.431 | 0.012 | 0.017 |
| Ex. 10 | 0.009 | 0.008 | 0.008 | 0.009 | 0.010 | 0.014 | 0.027 | 0.274 | 3.520 | 0.431 | 0.012 | 0.017 |
| Ex. 11 | 0.009 | 0.008 | 0.008 | 0.009 | 0.010 | 0.014 | 0.027 | 0.274 | 3.520 | 0.431 | 0.012 | 0.017 |
| Ex. 12 | 0.009 | 0.008 | 0.008 | 0.009 | 0.010 | 0.014 | 0.027 | 0.274 | 3.520 | 0.431 | 0.012 | 0.017 |
| | | | | | | | | | | | | |

| | Ultraviolet Transmittance of Ultraviolet Shielding Layer (One Layer) | | | | | | | | | | | |
|---|---|---|---|---|---|---|---|---|---|---|---|---|
| | T360 | T365 | T370 | T375 | T380 | T385 | T390 | T395 | T400 | Ultraviolet Transmittance at 360-400 nm | Ultraviolet Transmittance at 360-390 nm | Ultraviolet Transmittance at 380-390 nm |
| | % | % | % | % | % | % | % | % | % | % | % | % |
| Ex. 1 | 0.009 | 0.009 | 0.010 | 0.017 | 0.053 | 0.275 | 1.632 | 7.370 | 22.451 | 3.536 | 0.286 | 0.653 |
| Ex. 2 | 0.009 | 0.009 | 0.010 | 0.017 | 0.053 | 0.275 | 1.632 | 7.370 | 22.451 | 3.536 | 0.286 | 0.653 |
| Ex. 3 | 0.009 | 0.009 | 0.010 | 0.017 | 0.053 | 0.275 | 1.632 | 7.370 | 22.451 | 3.536 | 0.286 | 0.653 |
| Ex. 4 | 0.009 | 0.009 | 0.010 | 0.017 | 0.053 | 0.275 | 1.632 | 7.370 | 22.451 | 3.536 | 0.286 | 0.653 |
| Ex. 5 | 0.009 | 0.008 | 0.009 | 0.011 | 0.015 | 0.045 | 0.507 | 4.024 | 16.527 | 2.350 | 0.086 | 0.189 |
| Ex. 6 | 0.009 | 0.008 | 0.009 | 0.011 | 0.015 | 0.045 | 0.507 | 4.024 | 16.527 | 2.350 | 0.086 | 0.189 |
| Ex. 7 | 0.009 | 0.009 | 0.010 | 0.017 | 0.053 | 0.275 | 1.632 | 7.370 | 22.451 | 3.536 | 0.286 | 0.653 |
| Ex. 8 | 0.009 | 0.008 | 0.009 | 0.011 | 0.015 | 0.045 | 0.507 | 4.024 | 16.527 | 2.350 | 0.086 | 0.189 |
| Ex. 9 | 0.009 | 0.009 | 0.010 | 0.017 | 0.053 | 0.275 | 1.632 | 7.370 | 22.451 | 3.536 | 0.286 | 0.653 |
| Ex. 10 | 0.009 | 0.009 | 0.010 | 0.017 | 0.053 | 0.275 | 1.632 | 7.370 | 22.451 | 3.536 | 0.286 | 0.653 |
| Ex. 11 | 0.009 | 0.008 | 0.008 | 0.008 | 0.010 | 0.014 | 0.028 | 0.309 | 3.810 | 0.467 | 0.012 | 0.017 |
| Ex. 12 | 0.009 | 0.008 | 0.009 | 0.010 | 0.014 | 0.042 | 0.457 | 3.646 | 15.271 | 2.163 | 0.078 | 0.171 |
| | | | | | | | | | | | | |

| | Evaluation | | | | | | | | | | | |
|---|---|---|---|---|---|---|---|---|---|---|---|---|
| | Ultraviolet Transmittance of Interlayer Film | | | | | | | | | | | |
| | T360 | T365 | T370 | T375 | T380 | T385 | T390 | T395 | T400 | Ultraviolet Transmittance at 360-400 nm | Ultraviolet Transmittance at 360-390 nm | Ultraviolet Transmittance at 380-390 nm |
| | % | % | % | % | % | % | % | % | % | % | % | % |
| Ref. Ex. 1 | 0.009 | 0.008 | 0.007 | 0.009 | 0.010 | 0.014 | 0.023 | 0.164 | 2.613 | 0.317 | 0.011 | 0.016 |
| Ref. Ex. 2 | 0.009 | 0.008 | 0.007 | 0.009 | 0.010 | 0.014 | 0.023 | 0.164 | 2.613 | 0.317 | 0.011 | 0.016 |
| Ref. Ex. 3 | 0.009 | 0.008 | 0.007 | 0.009 | 0.010 | 0.014 | 0.023 | 0.164 | 2.613 | 0.317 | 0.011 | 0.016 |
| Ref. Ex. 4 | 0.009 | 0.008 | 0.007 | 0.009 | 0.010 | 0.014 | 0.023 | 0.164 | 2.613 | 0.317 | 0.011 | 0.016 |
| Comp. Ex. 1 | 0.009 | 0.008 | 0.007 | 0.009 | 0.010 | 0.014 | 0.023 | 0.164 | 2.613 | 0.317 | 0.011 | 0.016 |
| Comp. Ex. 2 | 0.009 | 0.008 | 0.007 | 0.009 | 0.010 | 0.014 | 0.023 | 0.164 | 2.613 | 0.317 | 0.011 | 0.016 |
| Comp. Ex. 3 | 0.009 | 0.008 | 0.007 | 0.009 | 0.010 | 0.014 | 0.023 | 0.164 | 2.613 | 0.317 | 0.011 | 0.016 |
| Comp. Ex. 4 | 0.009 | 0.008 | 0.007 | 0.009 | 0.010 | 0.014 | 0.023 | 0.164 | 2.613 | 0.317 | 0.011 | 0.016 |
| Comp. Ex. 5 | 0.01 | 0.01 | 0.014 | 0.034 | 0.156 | 0.888 | 4.554 | 15.501 | 35.430 | 6.289 | 0.809 | 1.866 |
| Comp. Ex. 6 | 0.01 | 0.008 | 0.009 | 0.011 | 0.015 | 0.048 | 0.551 | 4.362 | 17.651 | 2.518 | 0.093 | 0.205 |
| Comp. Ex. 7 | 0.009 | 0.008 | 0.007 | 0.009 | 0.010 | 0.014 | 0.023 | 0.164 | 2.613 | 0.317 | 0.011 | 0.016 |
| Ref. Ex. 5 | 0.009 | 0.008 | 0.007 | 0.009 | 0.010 | 0.014 | 0.023 | 0.164 | 2.613 | 0.317 | 0.011 | 0.016 |

**[Table 4]**

| | Initial Stage | | | | | | | After Ultraviolet Irradiation (500 hours) | | | | | | After Ultraviolet Irradiation (1000 hours) | | | | | |
|---|---|---|---|---|---|---|---|---|---|---|---|---|---|---|---|---|---|---|---|
| | A-Y | Ts2500 | T850 | T900 | T950 | C Light Yl | Haze Value | 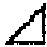 A-Y | 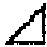 Ts2500 | 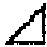 T850 | 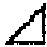 T900 | 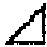 T950 | C Light 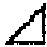 Yl | 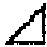 A-Y | 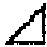 Ts2500 | 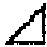 T850 | 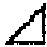 T900 | 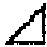 T950 | C Light 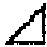 Yl |
| | % | % | % | % | % | % | % | % | % | % | % | % | % | % | % | % | % | % | % |
| Ref. Ex. 1 | 71.5 | 48.8 | 37.9 | 14.6 | 21.6 | 2.7 | 0.3 | -2.3 | -2.1 | 5.8 | 6.9 | 4.2 | -1.6 | -2.7 | -1.9 | 11.2 | 7.2 | -1.7 | 8.5 |
| Ref. Ex. 2 | 71.8 | 45.5 | 38.5 | 16.3 | 22.2 | 2.5 | 0.4 | -2.2 | -1.6 | 4.3 | 6.0 | 3.0 | -1.7 | -2.6 | -1.6 | 9.8 | 5.4 | -1.8 | 6.5 |
| Ref. Ex. 3 | 71.9 | 48.1 | 38.8 | 23.7 | 8.9 | 4.5 | 0.3 | -1.7 | -1.3 | 3.4 | 5.4 | 3.6 | -0.9 | -2.2 | -1.1 | 7.6 | 6.1 | -1.0 | 4.8 |
| Ref. Ex. 4 | 71.9 | 44.8 | 38.9 | 24.4 | 9.8 | 4.2 | 0.4 | -1.7 | -1.5 | 2.2 | 4.3 | 3.1 | -1.1 | -2.2 | -1.7 | 6.1 | 5.3 | -1.2 | 3.4 |
| Comp. Ex. 1 | 72.7 | 61.3 | 40.8 | 15.8 | 23.8 | 2.4 | 0.3 | -0.4 | -0.0 | 1.6 | 2.1 | 1.5 | -0.1 | -0.7 | -0.4 | 3.6 | 2.7 | -0.4 | 3.2 |
| Comp. Ex. 2 | 74.4 | 62.6 | 44.1 | 19.1 | 27.4 | 2.2 | 0.3 | -0.4 | 0.0 | 1.5 | 2.2 | 1.5 | -0.1 | -0.6 | -0.3 | 3.7 | 2.7 | -0.3 | 3.1 |
| Comp. Ex. 3 | 78.1 | 65.0 | 52.2 | 39.3 | 18.8 | 3.2 | 0.3 | -0.4 | -0.7 | -0.2 | 0.4 | 0.5 | -0.1 | -0.1 | -0.4 | 1.2 | 1.4 | -0.3 | 0.4 |
| Comp. Ex. 4 | 76.8 | 63.9 | 49.6 | 36.1 | 15.6 | 3.5 | 0.3 | -0.4 | -0.8 | -0.3 | 0.4 | 0.5 | -0.1 | -0.1 | -0.4 | 1.3 | 1.3 | -0.4 | 0.4 |
| Comp. Ex. 5 | 88.0 | 75.6 | 76.0 | 74.2 | 73.4 | 0.8 | 0.3 | -0.2 | 0.6 | 1.9 | 2.1 | 2.1 | 0.2 | -0.3 | 0.8 | 2.7 | 2.8 | 0.3 | 2.5 |
| Comp. Ex. 6 | 86.4 | 62.7 | 71.3 | 68.2 | 65.7 | 0.8 | 0.3 | -0.2 | -1.2 | -1.2 | -1.4 | -1.7 | -0.3 | -0.3 | -1.8 | -1.6 | -1.9 | -0.3 | -1.4 |
| Comp. Ex. 7 | 84.7 | 58.0 | 66.9 | 62.6 | 58.8 | 0.9 | 0.4 | -0.5 | -1.5 | -2.2 | -2.6 | -3.0 | -0.6 | -0.5 | -2.1 | -3.0 | -3.3 | -0.6 | -2.6 |
| Ref. Ex. 5 | 79.1 | 43.8 | 1.1 | 43.6 | 61.3 | 38.9 | 0.4 | 0.0 | -0.3 | 0.3 | 0.6 | -0.9 | -1.8 | 0.1 | -0.3 | 1.2 | -1.7 | -3.6 | 0.8 |

**[Table 5]**

| | Evaluation | | | | | | | | | | | | | | | | | | |
|---|---|---|---|---|---|---|---|---|---|---|---|---|---|---|---|---|---|---|---|
| | Initial Stage | | | | | | | After Ultraviolet Irradiation (500 hours) | | | | | | After Ultraviolet Irradiation (1000 hours) | | | | | |
| | A-Y | Ts2500 | T850 | T900 | T950 | C Light Yl | Haze Value | 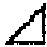 A-Y | 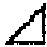 Ts2500 | 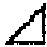 T850 | 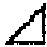 T900 | 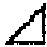 T950 | C Light 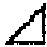 Yl | 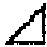 A-Y | 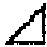 Ts2500 | 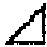 T850 | 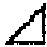 T900 | 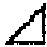 T950 | C Light 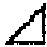 Yl |
| | % | % | % | % | % | % | % | % | % | % | % | % | % | % | % | % | % | % | % |
| Ex. 1 | 71.7 | 49.7 | 38.6 | 14.9 | 21.9 | 2.6 | 0.3 | -1.2 | -1.7 | 1.6 | 2.2 | 1.0 | -1.2 | -1.7 | -1.7 | 3.1 | 3.9 | 2.3 | -1.4 |
| Ex. 2 | 72.0 | 46.8 | 39.2 | 16.6 | 22.5 | 2.5 | 0.4 | -1.3 | -1.6 | 0.7 | 1.7 | 0.2 | -1.4 | -1.7 | -1.7 | 1.8 | 3.2 | 1.3 | -1.6 |
| Ex. 3 | 71.7 | 48.7 | 39.9 | 26.1 | 8.3 | 5.0 | 0.3 | -0.8 | -1.4 | 0.0 | 0.9 | 0.7 | -0.8 | -1.0 | -1.3 | 1.2 | 2.4 | 2.0 | -1.2 |
| Ex. 4 | 72.1 | 46.1 | 40.5 | 27.3 | 9.8 | 4.6 | 0.4 | -0.9 | -1.3 | -0.7 | 0.1 | 0.4 | -1.0 | -1.1 | -1.3 | 0.1 | 1.4 | 1.6 | -1.4 |
| Ex. 5 | 72.1 | 46.1 | 40.5 | 27.3 | 9.8 | 4.6 | 0.4 | -0.8 | -1.2 | -0.7 | 0.0 | 0.3 | -0.9 | -1.1 | -1.2 | 0.1 | 1.3 | 1.5 | -1.3 |
| Ex. 6 | 72.1 | 46.1 | 40.5 | 27.3 | 9.8 | 4.6 | 0.4 | -0.8 | -1.2 | -0.6 | 0.0 | 0.3 | -0.9 | -1.0 | -1.1 | 0.0 | 1.2 | 1.4 | -1.2 |
| Ex. 7 | 72.1 | 46.1 | 40.5 | 27.3 | 9.8 | 4.6 | 0.4 | -1.0 | -1.4 | -0.8 | 0.1 | 0.4 | -1.0 | -1.1 | -1.3 | 0.0 | 1.4 | 1.5 | -1.4 |
| Ex. 8 | 79.1 | 43.8 | 1.1 | 43.6 | 61.3 | 38.9 | 0.4 | 0.0 | -0.3 | 0.3 | 0.6 | -0.9 | -1.8 | 0.1 | -0.3 | 0.8 | 1.2 | -1.7 | -3.6 |
| Ex. 9 | 70.7 | 55.5 | 47.9 | 35.9 | 17.0 | 7.9 | 0.4 | -0.9 | -1.5 | 0.1 | 0.9 | 0.7 | -0.8 | -1.1 | -1.4 | 1.2 | 2.4 | 2.0 | -1.4 |
| Ex. 10 | 73.4 | 53.8 | 49.2 | 36.4 | 17.2 | 10.9 | 0.5 | -1.5 | -1.9 | -0.7 | 0.0 | 0.3 | -0.9 | -1.9 | -2.2 | 0.1 | 1.3 | 1.5 | -1.3 |
| Ex. 11 | 72.1 | 46.1 | 40.5 | 27.3 | 9.8 | 4.6 | 0.4 | -0.9 | -1.3 | -0.7 | 0.1 | 0.4 | -1.0 | -1.1 | -1.4 | 0.1 | 1.4 | 1.6 | -1.5 |
| Ex. 12 | 72.1 | 46.1 | 40.5 | 27.3 | 9.8 | 4.6 | 0.4 | -0.8 | -1.3 | -0.7 | 0.0 | 0.3 | -1.0 | -1.1 | -1.3 | 0.1 | 1.3 | 1.6 | -1.4 |

The interlayer films for a laminated glass in Reference Examples 1 to 5 had sufficiently high initial heat shielding properties.

### EXPLANATION OF SYMBOLS

- 1: Interlayer film for laminated glass
- 2: Heat shielding layer
- 2a: First surface
- 2b: Second surface
- 3: First ultraviolet shielding layer
- 3a: Outer surface
- 4: Second ultraviolet shielding layer
- 4a: Outer surface
- 5: Heat shielding particles
- 11: Laminated glass
- 12: First laminated glass component
- 13: Second laminated glass component

## Claims

1. An interlayer film for a laminated glass, comprising:
a heat shielding layer; and
a first ultraviolet shielding layer,
wherein the heat shielding layer comprises a thermoplastic resin, heat shielding particles and at least one component selected from a phthalocyanine compound, a naphthalocyanine compound, and an anthracyanine compound, and
the first ultraviolet shielding layer comprises a thermoplastic resin and an ultraviolet shielding agent.

2. The interlayer film for a laminated glass according to claim 1,
wherein the first ultraviolet shielding layer is laminated on one surface of the heat shielding layer.

3. The interlayer film for a laminated glass according to claim 1, further comprising a second ultraviolet shielding layer,
wherein the first ultraviolet shielding layer is placed on one surface side of the heat shielding layer,
the second ultraviolet shielding layer is placed on the other surface side of the heat shielding layer, and
the second ultraviolet shielding layer comprises a thermoplastic resin and an ultraviolet shielding agent.

4. The interlayer film for a laminated glass according to claim 3,
wherein the first ultraviolet shielding layer is laminated on one surface of the heat shielding layer, and
the second ultraviolet shielding layer is laminated on the other surface of the heat shielding layer.

5. The interlayer film for a laminated glass according to any one of claims 1 to 4,
wherein an ultraviolet transmittance of the ultraviolet shielding layer is not more than 0.5% at a wavelength of 360 to 390 nm, or the ultraviolet transmittance of the ultraviolet shielding layer is not more than 0.8% at a wavelength of 380 to 390 nm.

6. The interlayer film for a laminated glass according to any one of claims 1 to 4,
wherein the component is at least one selected from the group consisting of phthalocyanine, a phthalocyanine derivative, naphthalocyanine, and a naphthalocyanine derivative.

7. The interlayer film for a laminated glass according to any one of claims 1 to 4,
wherein the heat shielding particles are metal oxide particles.

8. The interlayer film for a laminated glass according to claim 7,
wherein the heat shielding particles are tin-doped indium oxide particles.

9. The interlayer film for a laminated glass according to any one of claims 1 to 4,
wherein the thermoplastic resin is a polyvinyl acetal resin.

10. The interlayer film for a laminated glass according to any one of claims 1 to 4,
wherein each of the heat shielding layer and the ultraviolet shielding layer further comprises a plasticizer.

11. The interlayer film for a laminated glass according to any one of claims 1 to 4,
wherein an amount of the ultraviolet shielding agent is 0.2 to 1.0 wt% based on 100 wt% of the ultraviolet shielding layer.

12. A laminated glass comprising:
a first laminated glass component and a second laminated glass component; and
an interlayer film sandwiched between the first and second laminated glass components,
wherein the interlayer film is an interlayer film for a laminated glass according to any one of claims 1 to 4.
